# NEW EUROPEAN PATENT SPECIFICATION

(11) **EP 0 856 590 B2**
(45) Date of publication and mention of the opposition decision: **28.12.2005**
(45) Mention of the grant of the patent: 02.05.2003
(21) Application number: 98101543.1
(22) Date of filing: 29.01.1998
(51) Int. Cl.: C22C 38/00, C22C 38/60

(54) **High strength non-thermal refining steel for hot forging**
Hochfester nicht-thermischer Frischstahl für Warmschmieden
Acier affiné non-thermique à haute résistance mécanique pour forgeage à chaud

(30) Priority: 04.02.1997 JP 5537197; 16.04.1997 JP 13154297
(43) Date of publication of application: 05.08.1998
(73) Proprietor: Daido Tokushuko Kabushiki Kaisha, Naka-ku Nagoya-city Aichi-prefecture (JP)
(72) Inventor: Takemoto, Satoshi, Ichinomiya-city, Aichi-prefecture (JP); Inoue, Koichiro, Suita-city, Osaka-prefecture (JP); Nakamura, Sadayuki, Mie-gun, Mie-prefecture (JP)
(74) Representative: Behnisch, Werner

(56) References cited:
- EP-A- 0 779 375
- JP-A- 8 291 373
- US-A- 5 135 587
- US-A- 5 507 093
- PATENT ABSTRACTS OF JAPAN vol. 097, no. 006, 30 June 1997 & JP 09 031594 A (SUMITOMO METAL IND LTD), 4 February 1997,
- "Metals Handbook, 9th Ed., Vol.8" 1985 , AMERICAN SOCIETY FOR METALS , OHIO, USA XP002074914 * page 262 - page 263 *
- PATENT ABSTRACTS OF JAPAN vol. 095, no. 007, 31 August 1995 & JP 07 097656 A (KOBE STEEL LTD), 11 April 1995,
- Machine translation of JP-A-9 031594
- KNELLER J.: 'Die Entwicklung stranggiessfähiger mikrolegierter Baustähle für Automobil-Schmiedeteile', Stahl und Eisen, vol. 107, Nr. 19, Sept. 1987, p. 905 - 909

## Description

### BACKGROUND OF THE INVENTION

### 1. Field of the Invention

This invention relates to a high strength non-thermal refining steel for hot forging to be used for a material of a forging such as a connecting rod of reciprocating engines, which is applied after separation into two or more pieces after forging thereof, and a method for separating the forging obtained by forging the aforementioned high strength non-thermal refining steel.

### 2. Description of the Prior Art

For example, the connecting rod , which connects between a piston and a crankshaft of the engine and converts a reciprocating motion of the piston into a rotatary motion of the crankshaft, is required to be separated into two pieces at a big end thereof in order to be connected to the crankshaft rotatably, accordingly, the connecting rod forged into the final shape in one body, heretofore, has been separated into two pieces through machine work, after finishing by machining according to demand. However, the method of this kind by the machine cutting has brought about great deal of dissipation of time and increase in the cost because excessive material is required at the cutting portion as cutting allowance and it is necessary to finish the section by machining or abrasion after the separation.

Although there is a proposal to form the connecting rod through sinter forging as one of means for solving the aforementioned problems, the sinter forging is very complicated process in itself and brings about decrease in the productivity and increase in the cost.

In general, parts obtained by hot-forging the ordinary ingot steel have sufficient toughness in a range of hardness of 20 to 35 HRC required generally for machine structural parts, therefore when the connecting rod forged by using the ordinary ingot steel is separated by breaking, large plastic deformation is caused in a part of the fractured face similarly to shear lip which may be observed in the impact test, and it is difficult to fit correctly the fractured faces with each other without treating the fractured faces.

### SUMMARY OF THE INVENTION

It is, therefore, an object of this invention to provide a high strength non-thermal refining steel for hot forging suitable to obtain a hot forging which is possible to be separated into two or more pieces easily by breaking without being cut by machine work in order to reduce wording hours and improve yield rate of materials. This steel can be used in a method for separating a hot forging which is possible to separate the hot forging made of the aforementioned non-thermal refining steel into two or more pieces easily by breaking without cutting it by machine work and possible to reduce working hours and improve yield rate of materials.

The high strength non-thermal refining steel for hot forging according to this invention is characterized by consisting by weight percentage of from 0.30 to 0.60 % of C, from 0.05 to 2.00 % of Si, from 0.10 to 1.00 % of Mn, from 0.05 to 0.20 % of P, from 0.03 to 0.50 % of Cu, from 0.03 to 0.50 % of Ni, from 0.01 to 0.50 % of Cr, from 0.05 to 0.50 % of V, from 0.010 to 0.045 % of s-Al, from 0.005 to 0.025 % of N, optionally at least one element selected from not more than 0.30 % of Pb, not more than 0.20 % of S, not more than 0.30 of Te, not more than 0.01 % of Ca and not more than 0.30 % of Bi, and the balance being Fe and incidental impurities.

The method for separating a hot forging is characterized by comprising the steps of hot-forging the non-thermal refining steel according to this invention into a hot forging with a hardness of 20 to 35 HRC, forming a notch in the hot forging around a fracture portion to be separated, the notch having a length of not less than 25 % of a length of whole circumference of the fracture portion and a stress-concentration factor of not less than 2.0, and separating the hot forging into two or more pieces by breaking the fracture portion in the notch at a speed of not lower than 0.5 mm/s.

In a case where the hot forging has the fracture portion with a polygonal section, it is desirable to form the notch so as to range over a full length of at least one side of the polygonal section at the fracture portion.

### BRIEF DESCRIPTION OF THE DRAWINGS

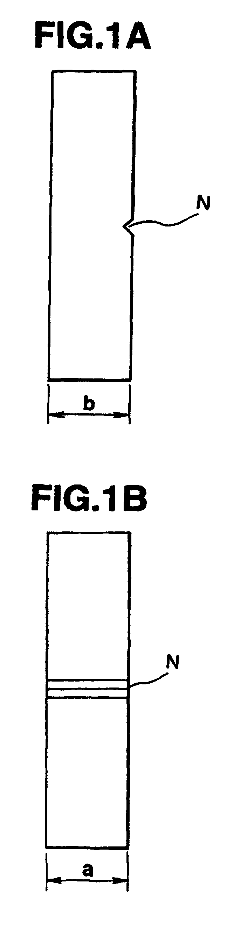

FIGS.1A and 1B are views illustrating a test specimen used for evaluating fitness of the hot forging after breaking in Example 2. In FIG.1A the top view is shown; and in FIG.1B the side view is shown.

### DETAILED DESCRIPTION OF THE INVENTION

According to the invention, the reason why the chemical compositions (weight percentage) of the high strength non-thermal refining steel are limited to the aforementioned range will be described below.
C: 0.30 ~ 0.60 %

C is a element effective to secure the strength of the forging and it is necessary to add C of not less than 0.30 % in order to obtain such the effect. However, the hardness of the forging becomes higher excessively and the machinability is lowered when C is added too much, therefore it is necessary to limit C up to 0.60 %.
Si: 0.05 ~ 2.00 %

Si has a deoxidizing action at a time of steel making, and disolves into ferrite and enhances strength of the ferrite, which is a soft phase causing the plastic deformation at the time of separation of the hot forging by breaking, thereby increasing percent brittle fracture (decreasing the plastic deformation) and improving fitness of the fractured faces of the hot forging. It is necessary to add Si of not less than 0.05 % in order to obtain such the effects. However, it is necessary to limit Si to not more than 2.00 % because hot workability is degraded if Si content is excessive.
Mn: 0.10 ~ 1.00 %, Cr: 0.10 ~ 0.50 %

Mn and Cr are elements effective for improving toughness of pearlite phase. However, in a case of separating the hot forging by breaking, the plastic deformation at the fractured faces becomes smaller and the fitness between the fractured faces is improved at the time when the toughness of the pearlite is low rather than high, so that Mn and Cr are defined in the ranges of from 0.10 to 1.00 % and from 0.10 to 0.50 %, respectively.
P: 0.05 ~ 0.20 %

P is generally controlled in low amount as an element harmful to the toughness of the steel by segregating at grain boundaries, but is added positively in the non-thermal refining steel for hot forging according to this invention which is applied to the hot forging to be separated by breaking after forging because P acts very effectively as an element increasing percent brittle fracture, decreasing the plastic deformation and improving the fitness between the fractured faces of the hot forging. However, the effect of this kind is saturated even if P is added in a large quantity, and excessive P is rather harmful to the fatigue limit and the hot workability of the steel, so that P is defined in the range of 0.05 to 0.20 %.
Cu: 0.03 ~ 0.50 %

Cu is mixed in the steel as an impurity similarly to P and deteriorates several properties of the steel, therefore is desirable to be reduced generally. But Cu is added actively in the non-thermal refining steel according to this invention since Cu acts very effectively as an element increasing the percent brittle fracture and improving the fitness between the fractured faces of the hot forging. However the hot workability is remarkably degraded, and the hardness becomes higher considerably owing to formation of bainite when Cu is added in a large quantity, therefore Cu is defined in the range of 0.03 to 0.50 %.
Ni: 0.03 ~ 0.50 %

In the non-thermal refining steel according to this invention, Cu is added positively in order to facilitate the separation of the hot forging by breaking, accordingly it is feared that the hot workability of the steel is degraded owing to the addition of Cu even a case where Cu is in the aforementioned claimed range. Therefore, the deterioration of the hot workability is prevented by addition of Ni in this invention. It is generally suitable to add Ni in an amount equal to Cu content in order to inhibit the deterioration of the hot workability caused by Cu, and the hardness becomes higher remarkably by the formation of bainite when Ni is added excessively, so that Ni is defined in the range of 0.03 to 0.50 %.
V: 0.05 ~ 0.50 %

V is an element strengthening the ferrite similar to Si, and improves the fitness between the fractured faces. Further, V is also an element to improve the fatigue strength of the steel, it is necessary to add V of not less than 0.05 % in order to obtain the effect of this kind. However, it is necessary to limit V up to 0.50 % since the addition of V in a large quantity is economically unfavorable.
s-Al: 0.010 ~ 0.045 %

Al forms nitrides with N and disperses in the austenite as fine particles, thereby preventing coarsening of crystal grains caused by reheating at the time of hot forging. In order to obtain such the effect it is necessary to add Al in an amount of not less than 0.010 % as s-Al. However, the effect is saturated even if Al is added in a large quantity and deterioration of the hot workability and the fatigue strength are brought on the contrary, so that Al is defined to the amount of not more than 0.045 % as s-Al.
N: 0.005 ~ 0.025 %

N is an element forming nitrides with V or Al and effective to secure the aforementioned ferrite strength and to prevent the coarsening of crystal grains. In order to obtain such the effects it is necessary to ad N of not less than 0.005 %. The excessive addition of N merely brings about saturation of the effects, therefore the upper limit of N is defined as 0.025 %.
At least one element selected from
Pb: not more than 0.30 %
S : not more than 0.20 %
Te: not more than 0.30 %
Ca: not more than 0.01 %
Bi: not more than 0.30 %

Every one of Pb, S, Te, Ca and Bi is an element effective to improve machinability of the steel, therefore, in a case where excellent machinability is further required for the forging, one or more elements selected from these elements may be added in a proper quantity according to demand.

However, excessive addition of these elements brings deterioration of the hot workability and the fatigue limit, so that it is necessary to limit Pb of not more than 0.30 %, S of not more than 0.20 %, Te of not more than 0.30 %,Ca of not more than 0.01 % and Bi of not more than 0.30 % in a case of adding these elements.

In the method for separating the hot forging the hot forging is formed through hot forging process by using the aforementioned high strength non-thermal refining steel, and then a notch with a stress-concentration factor of not less than 2.0 is formed in the obtained hot forging around a fracture portion to be separated in a length of not less than 25 % of the length of the whole circumference of the fracture portion. In a case where the fracture portion of the hot forging has a polygonal section, it is preferable to form the notch so as to range over the full length of at least one side of the polygonal section at the fracture portion. In this time, the shear lip is produced at the time of breaking and it is not possible to obtain sufficient fitness between the fractured faces in a case where the length of the notch does not reach 25 % of the length of the whole circumference of the fracture portion and the stress-concentration factor of the notch is less than 2.0. Furthermore, such tendency is shown also in a case where the fracture portion has the polygonal section and the notch is formed in a length shorter than the length of one side of the polygonal section.

Even in a case where the hot forging has the notch to satisfy the aforementioned conditions, the shear lip is produced similarly and it is not possible to obtain the sufficient fitness between the fractured faces when fracture speed is lower than 0.5 mm/s at the time of breaking. Accordingly, it is necessary to break the hot forging at the fracture speed of not lower than 0.5 mm/s, prefarably in a range of 1.0 to 100 mm/s.

The high strength non-thermal refining steel for hot forging has the aforementioned chemical compositions, especially contains P and Cu in relatively large quantities. Therefore, the hot forging obtained by hot-forging this non-thermal refining steel is broken easily into two or more pieces according to intergranular fracture caused by the addition of P, and the plastic deformation at the fractured faces of the hot forging is small and the fitness between the fractured faces is improved. Consequently, the non-thermal refining steel according to the invention is suitable to parts to be used after the separation such as connecting rods of the reciprocating engines.

In the method for separating the hot forging , the notch having the predetermined size and stress-concentration factor is formed in the fracture portion of the hot forging obtained by hot-forging the non-thermal refining steel according to this invention, and the hot forging is broken in the notch at the fracture portion at the predetermined speed. Therefore the hot forging is separated easily into two or more pieces without machine work, and the plastic deformation at the fractured faces of the separated pieces becomes smaller and the fitness between the fractured faces is also improved.

### EXAMPLE 1

Inventive and comparative steels having chemical compositions shown in Table 1 were melted and cast into ingots, subsequently the respetive ingots were hot-forged into forging materials of 50 mm size, which were further hot-forged into round bars of 22 mm in diameter after heating at 1200 °C for 60 min. Then specimens were cut out from the respective round bars and supplied to the various tests. The machinability was evaluated by measuring drilling efficiency with reference to a part of specimens. Further, the hot workability was evaluated by carring out high-temperature tensile test as to a part of the specimens.

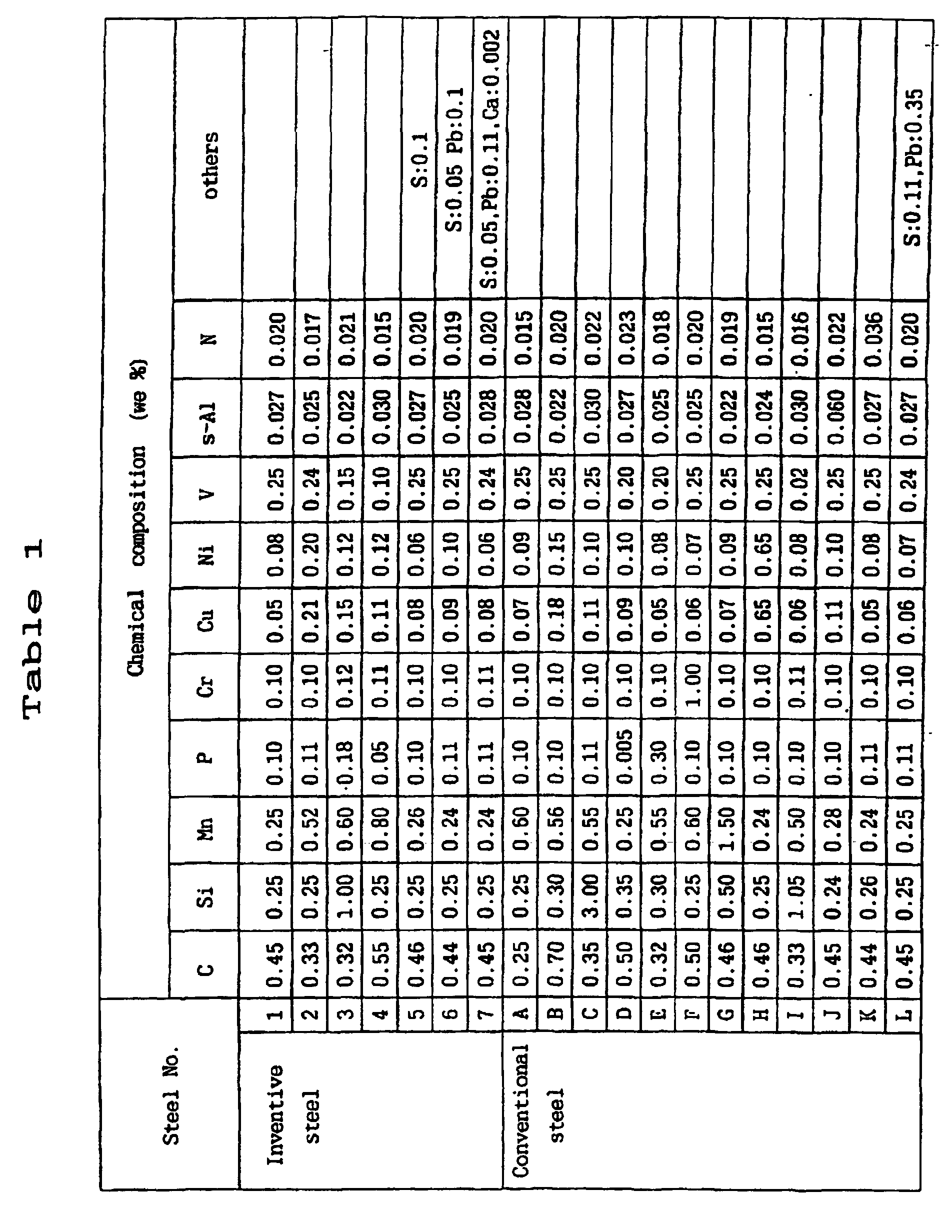

The hardness were measured in the center portion of each of the obtained round bars by Rockwell hardness tester, and obtained results were shown in Table 2. In order to evaluate breaking separability of the respective hot forgings, a tensile test was carried out on each of the round bars using notched tensile test specimen of 10 mm in diameter at the parallel part, of 1 mm in depth of the notch and of 0.2 mm in radius at the notch root, and an amount of the plastic deformation of the notched tensile test specimen was measured. The fatigue limit was measured using unnotched rotary bending fatigue test specimen of 8 mm in diameter at the parallel part. Further, in order to evaluate the machinability of the respective hot forgings, the tool life was measured by carrying out a drilling test under conditions shown in Table 3. The results of the drilling test were indicated as drilling efficiency with relative values (percentage) against the tool life of inventive steel No.1. Furthermore, the hot workability of the respective steels was evaluated according the value of reduction of area obtained by performing a tensile test at 1100 °C using a test specimen of 6 mm in diameter. The results obtained through the respective tests are shown together in Table 2.

**Table 2**

| Steel No. | | Hardness (HRC) | Plastic deformation (mm) | Fatigue limit (MPa) | Drilling efficiency | Reduction of area (%) |
|---|---|---|---|---|---|---|
| Inventive steel | 1 | 27.3 | 0.13 | 471.8 | 100 | 99.1 |
| | 2 | 24.8 | 0.18 | 434.5 | - | 97.3 |
| | 3 | 21.1 | 0.17 | 389.4 | - | - |
| | 4 | 25.6 | 0.19 | 446.5 | - | - |
| | 5 | 27.6 | 0.12 | 448.5 | 315 | 98.6 |
| | 6 | 27.2 | 0.11 | 446.7 | 423 | 96.1 |
| | 7 | 27.2 | 0.14 | 444.2 | 453 | 96.0 |
| Comparative steel | A | 15.3 | 2.10 | 293.0 | - | - |
| | B | 35.3 | 0.05 | 529.2 | 69 | - |
| | C | 34.5 | 0.07 | 512.9 | 72 | 58.4 |
| | D | 23.4 | 2.53 | 408.7 | - | - |
| | E | 22.5 | 0.01 | 304.3 | - | 57.3 |
| | F | 39.4 | 0.19 | 546.9 | 53 | - |
| | G | 38.5 | 0.20 | 555.8 | 57 | - |
| | H | 28.0 | 0.08 | 472.0 | - | 49.3 |
| | I | 13.0 | 2.88 | 302.5 | - | - |
| | J | 27.6 | 0.10 | 314.3 | - | 53.4 |
| | K | 28.7 | 0.09 | 321.4 | - | 58.6 |
| | L | 24.8 | 0.15 | 308.3 | 1050 | 55.2 |

**Table 3**

| | |
|---|---|
| Tool | SKH 51 (High speed tool steel) |
| Feed rate | 0.1 mm/rev. |
| Depth of hole | 10 mm |
| Tool life | Impossible to cut |

The following matters became evident from the results shown in Table 2.

Comparative steel A shows large plastic deformation and low fatigue limit because the C content is low as compared with inventive steels Nos.1 and 2. In comparative steel B, the hardness becomes too high and the drilling efficiency, that is the machinability is low since the C content is high excessively.

Comparative steel C shows low value of the reduction of area and low hot workability because the Si content is too high. Further in the steel C, the hardness becomes higher excessively and the drilling efficiency is lowered.

Comparative steel D shows large plastic deformation because the P content is lower than that of inventive steel NO.1. Comparative steel E deteriorates in the fatigue limit and the value of the reduction of area because of the excessive P content.

In comparative steel F which contains Cr in a large quantity and comparative steel G which contains Mn in a large quantity, the hardness becomes too high and the drilling efficiency is low in both cases.

Comparative steel H is low in the reduction of area and the hot workability is lowered because of high amounts of Cu and Ni.

Comparative steel I shows large plastic deformation and the fatigue limit deteriorates since the V content is low and the hardness is low as compared with inventive steel No.2.

Comparative steel J contains s-Al in a large quantity and comparative steel K contains N in a large quantity, therefore the fatigue limit and the reduction of area of these steels are remarkably degraded as compared inventive steel No.1.

In comparative steel L which is added with Pb excessively, the fatigue limit and the reduction of area deteriorates considerably as compared with these of inventive steel No.1 which contains alloying elements on the same level approximately,therefore it is found that excessive addition of the elements effective to improve the machinability such as Pb, Te, Ca and Bi are not desirable.

In contrast to the above, it is apparent that inventive steels Nos.1 to 7 are excellent in the fatigue limit and the plastic deformation equally as compared with comparative steels A to N in a practical hardness range, that is in the range of 20 to 35 HRC. Furthermore, it becomes clear from data of inventive steels Nos.5 to 7 that addition of Pb, S and Ca in proper degree is effective to improve the machinability of the steel without degrading the fatigue limit so much.

### EXAMPLE 2

Inventive and comparative steels shown in Table 4 were melted and hot-forged into plates in sizes of 20x60x1000 mm.

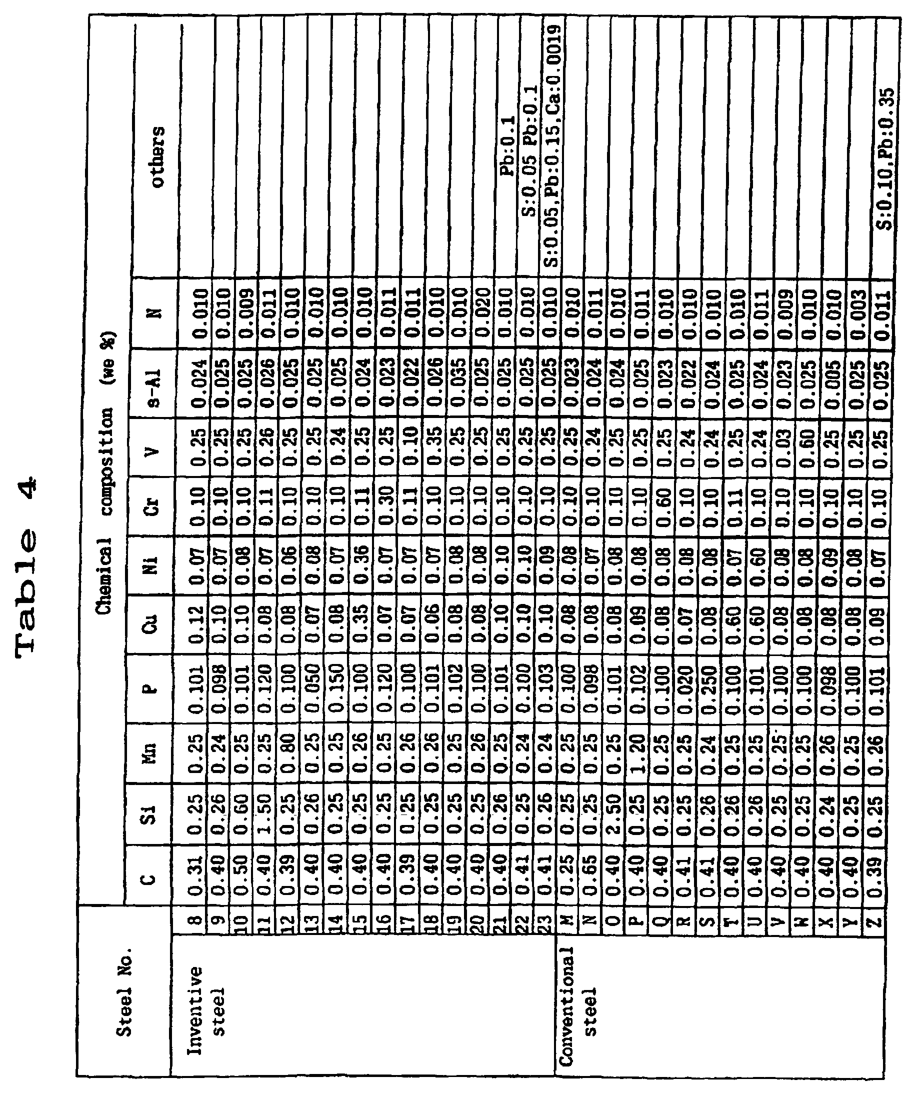

The test specimens as shown in FIG.1 (wherein, a:b = 1:1, stress-concentration factor of notch N = 2.2) were cut out from the respective plates by copying a shape of the connecting rod at the separating portion between big end and big end cap. The test specimens were broken by applying tensile force at a speed of 10 mm/s in the longitudinal direction thereof. The fitness between the fractured face of the specimen was evaluated by an amount of the plastic deformation obtained from load-deformation curve at the time when the specimen was broken.

Further, the hardness was measured by the Rockwell hardness tester and the fatigue limit was measured using the unnotched rotary bending fatigue test specimen of 8 mm in diameter at the parallel part on the respective plates. The results obtained through these tests are shown in Table 5.

**Table 5**

| Steel No. | | Hardness (HRC) | Plastic deformation (mm) | Fatigue limit (MPa) | Reduction of area (%) | Drilling efficiency |
|---|---|---|---|---|---|---|
| Inventive steel | 8 | 26.3 | 0.44 | 491 | 97 | - |
| | 9 | 28.0 | 0.10 | 514 | 98 | 100 |
| | 10 | 32.9 | <0.01 | 547 | - | - |
| | 11 | 33.9 | <0.01 | 549 | - | - |
| | 12 | 30.8 | 0.13 | 513 | - | - |
| | 13 | 20.6 | 0.30 | 456 | - | - |
| | 14 | 33.1 | <0.01 | 569 | 92 | - |
| | 15 | 34.1 | 0.09 | 518 | 90 | - |
| | 16 | 30.2 | 0.01 | 568 | - | - |
| | 17 | 21.2 | 0.19 | 402 | - | - |
| | 18 | 27.0 | 0.04 | 593 | - | - |
| | 19 | 26.8 | 0.08 | 519 | - | - |
| | 20 | 26.6 | 0.09 | 516 | - | - |
| | 21 | 28.8 | 0.08 | 518 | - | 265 |
| | 22 | 29.0 | 0.05 | 519 | - | 475 |
| | 23 | 28.9 | 0.05 | 519 | - | 476 |
| Comparative steel | M | 19.6 | 1.18 | 423 | - | - |
| | N | 37.6 | <0.01 | 582 | - | - |
| | O | 38.0 | <0.01 | 518 | - | - |
| | P | 38.2 | 0.08 | 519 | - | - |
| | Q | 37.3 | 0.09 | 585 | - | - |
| | R | 14.5 | 1.90 | 416 | - | - |
| | S | 29.8 | <0.01 | 412 | 75 | - |
| | T | 56.4 | 0.09 | 518 | 68 | - |
| | U | 58.8 | 0.09 | 509 | 87 | - |
| | V | 19.8 | 0.18 | 351 | - | - |
| | W | 37.2 | <0.01 | 779 | - | - |
| | X | 26.6 | 0.09 | 416 | - | - |
| | Y | 26.5 | 0.09 | 436 | - | - |
| | Z | 27.0 | 0.13 | 411 | - | 612 |

Further, specimens of 20x60x300 mm were cut out from representative plates among the hot-forged steel plates, and the machinability of the plates was evaluated by measuring the tool life according to the drilling test under the same condition as shown in Table 3 similarly to the case of Example 1. The results obtained through the drilling test are also shown with relative values (percentage) against the tool life of inventive steel No.9 as drilling efficiency in Table 5. In respect to a part of the steels, values of reduction of area obtained through Gleeble high-temperature tensile test at 1200 °C are also shown in Table 5 as indexes of the hot workability.

Next, test specimens having notches different from each other in their radii of curvature at notch roots thereby differing in the stress-concentration factors were cut out from inventive steel No.8 which shows relatively large plastic deformation and is inferior in the fitness of the fractured faces among the inventive steels. Then, the influence of the stress-concentration factor of the notch on the plastic deformation (fitness between the fractured faces) was investigated by breaking the respective test specimens at the speed of 10 mm/s. The obtained results are shown in Table 6. Similarly, quantitative change of the plastic deformation is shown in Table 7 at the time of breaking test specimens different from each other in the ratios of a to b (see FIG.1) at the speed of 10 mm/sec.

Furthermore, the quantitative change of the plastic deformation is shown in Table 8 in a case of breaking test specimens which were cut out from inventive steel No.8, have a/b ratio of 1 and the stress-concentration factor of 2.2 at different speed of 0.1 to 100 mm/s.

**Table 6**

| | | | | |
|---|---|---|---|---|
| stress-concenration factor | 1.8 | 2.2 | 2.8 | 3.8 |
| plastic deformation (mm) | 1.82 | 0.44 | 0.18 | <0.01 |
| fracture speed: 10 mm/s, a:b = 1:1 | | | | |

**Table 7**

| | | | | |
|---|---|---|---|---|
| a : b | 1:1.5 | 1:1 | 1.5:1 | 2:1 |
| Rate of notch length to the whole circumference | 0.2 | 0.25 | 0.3 | 0.33 |
| Plastic deformation (mm) | 0.89 | 0.44 | 0.36 | 0.33 |
| Fracture speed: 10 mm/s, stress-concentration factor: 2.2 | | | | |

**Table 8**

| | | | | |
|---|---|---|---|---|
| Fracture speed (mm/s) | 0.1 | 1 | 10 | 100 |
| Plastic deformation (mm) | 0.76 | 0.48 | 0.38 | 0.32 |
| a:b = 1:1, stress-concentration factor: 2.2 | | | | |

The following facts becomes clear from the results shown in Table 5.

It is not possible to obtain the sufficient hardness in comparative steel M since the C content is low and the plastic deformation at the time of breaking becomes larger and the fitness between the fractured faces becomes low. The hardness of comparative steel N is too high since the C content is high excessively. It is confirmed from these facts that it is necessary to define the C content in the range of 0.30 to 0.60 %.

Comparative steel C contains Si excessively, whereby the hardness becomes too high. Also in comparative steels P and Q, the bainite is formed even in the plate cooled in air after hot forging and the hardness becomes too high since the Mn and Cr content are high excessively. Accordingly it is confirmed that Si, Mn and Cr have to be limited in ranges of 0.05 to 2.00 %, 0.10 to 1.00 % and 0.01 to 0.50 %, respectively.

In comparative steel R, the plastic deformation at the time of breaking becomes large since the P content is low, and it is not possible to obtain excellent fitness of the fractured faces. Comparative steel S contains P too much and is excellent in the fitness between the fractured faces, but is lowered in the toughness extremely and inferior in the fatigue strength to the inventive steel in the equivalent level of the hardness. It is necessary to limit P in the range of 0.05 to 0.20 %.

In comparative steel T containing Cu in a large quantity, the bainite is formed even in a case of air-cooling and the hardness becomes higher excessively. It is found that the reduction of area by Gleeble test is degraded and remarkable deterioration in the hot workability is also observed. Also in comparative steel U, the hot workability is improved by addition of Ni, but the hardness becomes too high owing to the generation of bainite. It is confirmed from these facts that it is necessary to limit Cu and Ni in the ranges of 0.03 to 0.50 %, respectively.

In comparative steel V, it is not possible to obtain the sufficient hardness because of the low V content. Comparative steel W becomes too high in the hardness because of the excessive V content. Accordingly, it becomes clear that it is necessary to limit V in the range of 0.05 to 0.50 %.

Comparative steel X contains s-Al in a small quantity and is remarkably degraded in the fatigue limit as compared with the inventive steel in the equivalent level of the hardness since the crystal grains are coarsened by heating at the hot forging process. However the effect of Al is saturated even if Al is added in a large quantity and it is necessary to limit sAl in the range of 0.010 to 0.045 %. In comparative steel Y containing N in a small quantity, the crystal grain is coarsened and the fatigue strength is degraded. Therefore, it si necessary to limit N in the range of 0.005 to 0.025 % as mentioned above.

In comparative steel Z which is added with Pb excessively, the machinability is considerably improved but the fatigue limit is degraded remarkably as compared with the inventive steel having the hardness in the equivalent level, and it is found that excessive addition of the elements to improve the machinability such as Pb, S Te, Ca and Bi is not desirable. Therefore, it is necessary to limit Pb up to 0.30 %, to limit S up to 0.20 %, to limit Te up to 0.30 %, to limit Ca up to 0.01 %, and to limit Bi up to 0.30 %.

It is apparent that inventive steel Nos.8 to 20 are excellent in the all of the fatigue limit, the fitness between the fractured faces and the hot workability as compared with comparative steels M to Z in the practical hardness range, that is in the range of 20 to 35 HRC. Furthermore, it is clear from data of inventive steels Nos.21 to 23 that addition of Pb, S, Te, Ca and Bi in a proper quantity is effective to improve the machinability without degrading the fatigue limit so much.

It is confirmed from the results shown in Table 6 that the higher the stress-concentration factor of the notch, the smaller the plastic deformation, thereby improving the fitness between the fractured faces. When the stress-concentration factor of the notch is 1.8, the plastic deformation becomes large and it is not possible to obtain the sufficient fitness even in the inventive steel. Accordingly, it is necessary to limit the stress-concentration factor of the notch to not less than 2.0.

It becomes clear from the data shown in Table 7 that the fitness between the fractured faces changes according to the change of ratio of a to b of the test specimen. Namely, when the obtained results are put in order of the rate of the notch length to the length of the whole circumference of the specimen, excellent fitness can be obtained in a case where the rate of the notch length is not lower than 25 %, but the plastic deformation becomes larger in the other cases. Therefore, it is clear that it is necessary to form the notch in a length of not less than 25 % of the length of the whole circumference of the fracture portion of the hot forging. In a case where the fracture portion of the hot forging has the polygonal section and the notch length is shorter than the length of one side of the polygonal section even if the rate of the notch length against the length of the whole circumference exceeds 25 %, the fitness between the fractured faces is sometimes lowered, accordingly it is desirable to form the notch so as to range over the full length of at least one side of the polygonal section of the fracture portion.

It is seen from the results shown in Table 8 that the plastic deformation also changes according to the change of the fracture speed at the time of breaking. Namely, the plastic deformation increases and the fitness between the fractured face with the decrease in the fracture speed. Accordingly, it is necessary to break the hot forging at an speed of not lower than 0.5 mm/s.

As mentioned above, the high strength non-thermal refining steel for hot forging according to this invention is characterized by consisting by weight percentage of 0.30 to 0.60 % of C, 0.05 to 2.00 % of Si, 0.10 to 1.00 % of Mn, 0,05 to 0.20 % of P, 0.03 to 0.50 % of Cu, 0.03 to 0.50 % of Ni, 0.01 to 0.50 % of Cr, 0.05 to 0.50 % of V, 0.010 to 0.045 % of s-Al, 0.005 to 0.025 % of N, optionally at least one element selected from not more than 0.30 % of Pb, not more than 0.20 % S, not more than 0.30 % of Te, not more than 0.01 % of Ca and not more than 0.30 % of Bi, and the balance being Fe and incidental impurities. Therefore, the hot forging made of this steel is easy to be separated into two or more pieces by breaking and it is possible to minimize the plastic deformation at the fractured faces, thereby improving the fitness between the fractured faces. Consequently, it is suitable to hot-forge, for example, connecting rods of the engine for automobiles.

The method for separating a hot forging is characterized by comprising the steps of hot-forging the above-mentioned non-thermal refining steel according to this invention into a hot forging with a hardness of 20 to 35 HRC, forming a notch in the hot forging around a fracture portion to be separated, the notch having a length of not less than 25 % of a length of whole circumference of the fracture portion and a stress-concentration factor of not less than 2.0 (in a case the fracture portion has a polygonal section, the notch may be formed so as to range over the full length of at least one side of the polygonal section), and separating the hot forging into two or more pieces by breaking the fracture portion in the notch at a speed of not lower than 0.5 mm/s. Accordingly it is possible to separate the hot forging into two or more pieces easily by breaking without machine cutting and possible to decrease the plastic deformation at the fractured faces whereby the fitness between the fractured faces of the hot forging can be improved.

## Claims

1. A high strenght non-thermal refining steel for hot forging consisting by weight percentage of from 0.30 to 0.60% of C, from 0.05 to 2.00% of Si, from 0.10 to 1.00 % of Mn, from 0.05 to 0.20% ofP, from 0.03 to 0.50% of Cu, from 0.03 to 0.50% ofNi, from 0.01 to 0.50% of Cr, from 0.05 to 0.50% of V, from 0.010 to 0.045% of s-Al, from 0.005 to 0.025% ofN, optionally at least one element selected from not more than 0.30% of Pb, not more than 0.20% of S, not more than 0.30% of Te, not more than 0.01 % of Ca and not more than 0.30% of Bi, and the balance being Fe and incidental impurities.

## Patentansprüche

1. Nicht-thermischer veredelter Stahl hoher Festigkeit zum Warmschmieden, bestehend aus, in Gewichtsprozent: 0,30 bis 0,60 % C, 0,05 bis 2,00 % Si, 0,10 bis 1,00 % Mn, 0,05 bis 0,20 % P, 0,03 bis 0,50 % Cu, 0,03 bis 0,50 % Ni, 0,01 bis 0,50 % Cr, 0,05 bis 0,50 % V, 0,010 bis 0,045 % s-Al, 0,005 bis 0,025 % N, wahlweise mindestens einem Element, ausgewählt aus der Gruppe, bestehend aus nicht mehr als 0,30 % Pb, nicht mehr als 0,20 % S, nicht mehr als 0,30 % Te, nicht mehr als 0,01 % Ca und nicht mehr als 0,30 % Bi, wobei der Restbestandteil Fe und gelegentliche Verunreinigungen sind.

## Revendications

1. Acier de résistance mécanique élevée à affinage non thermique, destiné au forgeage à chaud et constitué, en pourcentages pondéraux, de 0,30 à 0,60 % de C, 0,05 à 2,00 % de Si, 0,10 à 1,00 % de Mn, 0,05 à 0,20 % de P, 0,03 à 0,50 % de Cu, 0,03 à 0,50 % de Ni, 0,01 à 0,50 % de Cr, 0,05 à 0,50 % de V, 0,010 à 0,045 % de Al-s, 0,005 à 0,025 % de N, éventuellement au moins un élément choisi parmi au plus 0,30 % de Pb, au plus 0,20 % de S, au plus 0,30 % de Te, au plus 0,01 % de Ca et au plus 0,30 % de Bi, le reste étant formé de Fe et d'impuretés inévitables.
